Europäisches Patentamt

European Patent Office

Office européen des brevets

(11) Veröffentlichungsnummer: **0 377 058**
**A1**

## (12) EUROPÄISCHE PATENTANMELDUNG

(21) Anmeldenummer: **89100013.5**

(22) Anmeldetag: **02.01.89**

(51) Int. Cl.5: **F16K 11/052, B65G 53/56**

(43) Veröffentlichungstag der Anmeldung:
**11.07.90 Patentblatt 90/28**

(84) Benannte Vertragsstaaten:
**AT BE CH DE ES FR GB GR IT LI LU NL SE**

(71) Anmelder: **DISCO**
**Via Gringna 11**
**I-20091 Cinisello Balsamo(IT)**

(72) Erfinder: **Powell, Walter**
**13911 Emerald Forest**
**Sugarland Texas 77478(US)**

(74) Vertreter: **Müller, Gerd et al**
**Patentanwälte**
**HEMMERICH-MÜLLER-GROSSE-POLLMEIER--**
**MEY Hammerstrasse 2**
**D-5900 Siegen 1(DE)**

(54) **Wechselventil.**

(57) Es wird ein Wechselventil beschrieben, bestehend aus einem Ventilgehäuse (12) mit einem Zuflußanschlußstück (14) und zwei Abflußanschlußstükken (16, 18), welche Anschlußstücke (14, 16, 18) miteinander in Durchströmungsverbindung stehen, und einem von außen mittels Drehantrieb (22) betätigbaren, innerhalb des Ventilgehäuses (12) angeordneten Ventilschieber oder Ventilscheibe (20), der wahlweise die Durchströmungsverbindung von Zuflußanschlußstück zu dem einem oder dem anderen Abflußanschlußstück (16, 18) herstellt. Erfindungsgemäß ist der Ventilschieber bzw. die Ventilscheibe (20) von einer Teilkugelscheibe gebildet, die mittels eines Exzenterantriebs auf ebenfalls auf einer Kugelfläche liegenden Ventilsitzflächen (36 bzw. 38) aufschiebbar und andrückbar ist.

*Fig.3.*

EP 0 377 058 A1

# Wechselventil

Die Erfindung betrifft ein Wechselventil, bestehend aus einem Ventilgehäuse mit einem Zuflußanschlußustück ( oder einem Abflußanschlußstück) und zwei Abflußanschlußstücken (oder entsprechend zwei Zuflußanschlußstücken), welche Abflußanschlußstücke miteinander in Durchströmungsverbindung stehen, und einem von außen mittels Drehantrieb betätigbaren, innerhalb des Ventilgehäuses angeordneten Ventilschieber (oder Ventilscheibe), der wahlweise die Durchströmungsverbindung vom Zuflußanschlußstück (Abflußanschlußstück) zu dem einen oder dem anderen Abflußanschlußstück (Zuflußanschlußstücken) herstellt.

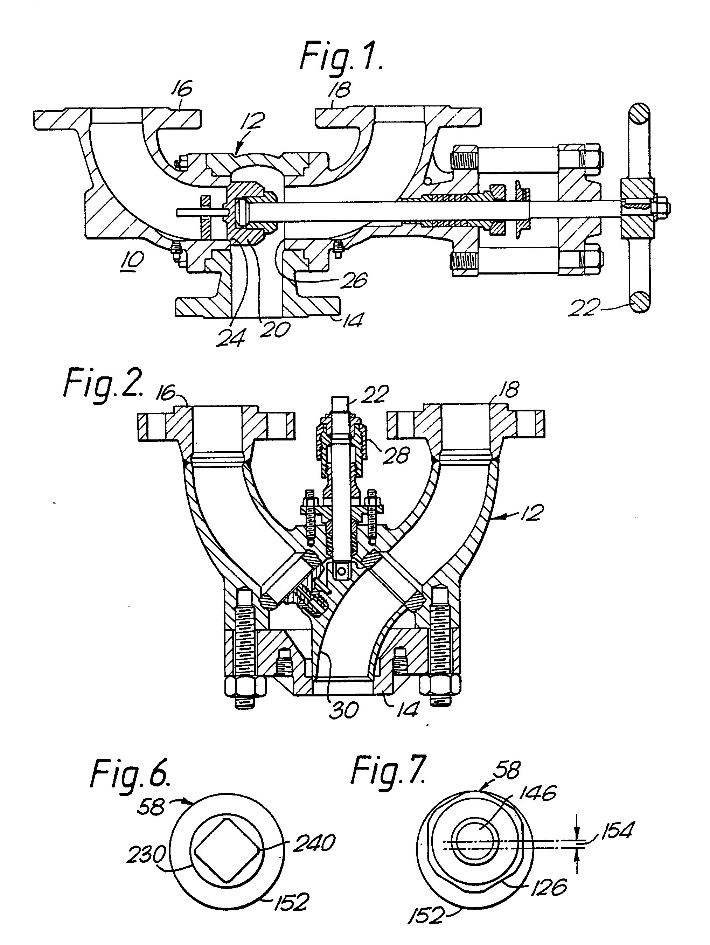

Ein derartiges Wechselventil ist bereits bekannt, die Fig. 1 zeigt ein derartiges bekanntes Ventil.

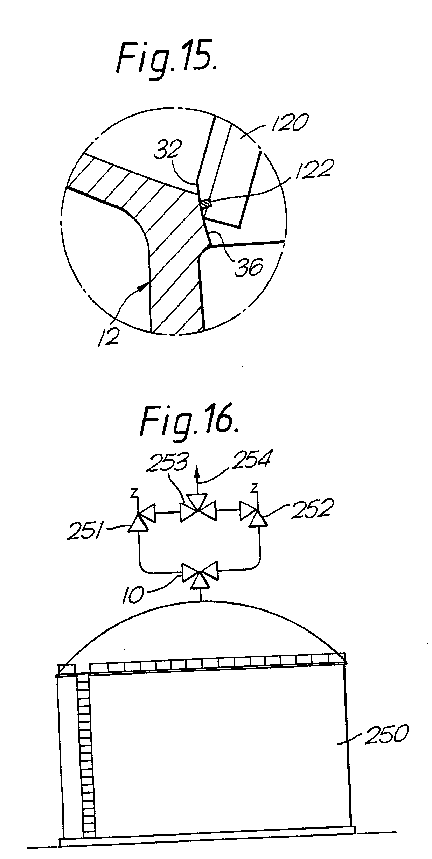

Derartige Wechselventile ermöglichen die Umschaltung von einer Leitung auf jeweils eine von zwei weiteren Leitungen, wobei die häufigste Anwendung die Kombination mit Sicherheitsvorrichtungen darstellt, wie sie Fig. 16 schematisch wiedergibt. Dort ist auf einem beispielsweise unter Druck stehenden Gasbehälter 250 ein derartiges Wechselventil 10 vorgesehen, um wahlweise einen Strömungsweg zu einem ersten oder einem zweiten Sicherheitsventil 251, 252 herzustellen, derart, daß immer ein Ventil betriebsbereit ist, während das zweite als auf Wartestellung befindliches Ventil fungiert. Hinter den Sicherheitsventilen kann über ein weiteres Wechselventil 253 weider eine Vereinigung der Strömunsgverzweigung erfolgen, um so einen einzigen Abfluß 254 für das Gas zu schaffen.

Ein Wechselventil sollte in einer Richtung stets offen sein und den Durchfluß von Strömungsmedium möglichst wenig behindern. Letzteres ist bei der in Fig. 1 dargestellten Ausführungsform gemäß dem Stand der Technik nicht der Fall, da dort eine recht scharfe Strömungsumlenkung sich ergibt, die zu erheblichem Druckabfall infolge hohen Strömungswiderstandes führen kann. Ein weiterer Nachteil ist der, daß bei nicht korrekter Bedienung des bekannten Wechselventils das Ventil auch eine Dauerzwischenstellung einnehmen kann, in der in beide Zweige des Wechselventils Strömungsmedium fließen kann. Dieses Wechselventil kann somit falsch bedient werden. Außerdem ist störend, daß zum Umschalten des Wechselventils gemäß Fig. 1 viele Umdrehungen des dort dargestellten Handrades notwendig sind. Das ist nicht nur zeitaufwendig, sondern behindert auch ein genau synchrones Bedienen von mehrfach vorhandenen Wechselventilen, beispielsweise die in Fig. 16 dargestellten zwei Wechselventile 10, 253.

Außerdem sollte sichergestellt sein, daß in beiden Strömungsrichtungen völlig gleiche Verhältnisse vorliegen, was bei der Ausführungsform gemäß Fig. 1 nicht unbedingt der Fall sein muß, dies aufgrund der unsymmetrischen Aufbauweise des Schiebers 20 mit Bezug auf die beiden Verzweigungen 16, 18.

Das Wechselventil 10 wird zwar als mit einem Zuflußanschlußstück und zwei Abflußanschlußstükken beschrieben, doch sollte die Strömungsrichtung grundsätzlich beliebig gewählt sein können, so ist auch bei dem zweiten Wechselventil 253 gemäß Fig. 16 die Strömungsrichtung derart, daß die beiden "Abflußanschlußstücke" als Zufluß für Strömungsmedium dienen, während das "Zuflußanschlußstück" zum Wegführen des Strömungsmediums dient. "Zufluß" und "Abfluß" sind insoweit austauschbar.

Fig. 2 zeigt eine gegenüber Fig. 1 verbesserte Konstruktion, bei der, allerdings auf verhältnismäßig komplizierte Weise, erreicht ist, daß die Ventilscheibe axialsymmetrisch bezüglich der beiden Verzweigungsleitungen verschwenkbar ist, desweiteren ist die Betätigungswelle nur um 180° zu verdrehen, allerdings erst, nachdem eine Verriegelungsvorrichtung die Ventilscheibe von dem Ventilsitz abgehoben hat, wonach die Ventilscheibe um 180° verschwenkt und dann unter entsprechender Betätigung der Verriegelungsvorrichtung wieder an den Ventilsitz nunmehr des anderen Zweiges herangefahren wird. Diese Anordnung ergibt sehr aufwendige Bearbeitung von Innenteilen für Drehmechanismus. Auch die Montage ist sehr teuer.

Aufgabe der Erfindung ist es, das bekannte Wechselventil dahingehend zu verbessern, daß sich nur ein sehr kleiner Strömungswiderstand ergibt, daß weiterhin mit einer Spindel-oder Wellendrehung von weniger als 360° eine Umschaltung möglich wird, ohne daß dazu ein besonderer Verriegelungs-mechanismus gesondert zu betätigen wäre, und daß ohne wesentliche Verkomplizierung des Aufbaus gemäß dem Stand der Technik eine wesentlich einfachere und sicherere, Falschbedienungen reduzierende Konstruktion geschaffen wird, die im übrigen auch bei Bedarf fernbedienbar ist.

Gelöst wird die Aufgabe dadurch, daß die Ventilscheibe von einer Teilkugelschale gebildet wird, die mittels eines Exzenterantriebs auf gleichfalls auf einer Kugelfläche liegenden Ventilsitzfläche aufschiebbar und andrückbar ist.

Durch diese Art des Exzenterantriebs in Verbindung mit einer Kugelfläche wird ermöglicht, mit einer weniger als 360° umfassenden Drehbewegung die Umschaltung des Wechselventils vorzunehmen, wobei der Gesamtaufbau bezüglich der beiden Verzweigungen axialsymmetrisch ist und dadurch nicht nur gleichartige Strömungsverhältnisse in beiden Schaltfällen sich ergeben, mit insgesamt verwirbelungsarmen und damit strömungsgünstigen Fließweg für das Strömungsmedium, und so insgesamt ein nur geringer Druckverlust innerhalb des Wechselventils entsteht, sondern es ergibt sich dadurch auch eine sehr einfache mechanische Bearbeitung.

Während beim Stand der Technik das Ventilgehäuse mit Zuflußanschlußstück und Abflußanschlußstücken mehrteilig ausgeführt und die Bearbeitung und Montage der vielen Teile sehr teuer ist, gelingt es erfingungsgemäß, das Gehäuse aus einem Stück, beispielsweise aus Stahlguß oder auch Edelstahlguß, herzustellen, weil durch die besondere Konstruktion ein Auseinandernehmen des Gehäuses zum Zwecke der Montage der Innenteile - im Gegensatz zum Stand der Technik - entbehrlich ist.

Zu diesem Zweck ist es besonders günstig, wenn gemäß einer anderen Ausführungsform die Teilkugelschale von dem Hut einer pilzförmigen Ventilscheibe gebildet wird, deren Pilzrand eine auf einer Kugel (Radius R) liegende erste Ringfläche bildet, wobei der Kugelmittelpunkt auf der verlängerten Achse des Pilzfußes jenseits des Fußendes liegt, und wenn die Ventilscheibe von einem auf der Befestigungsspindel des Drehantriebs exzentrisch zur Betätigungsspindelachse gelegenen Ventilscheibenhebel derart gehalten wird, daß der Kugelmittelpunkt annähernd (abgesehen von der Exzenterbewegung) auf der Achse der Betätigungsspindel liegt.

Dabei kann zum Ausgleich von Toleranzen zweckmäßigerweise am Übergang zwischen Pilzfuß und Pilzhutunterseite eine auf einer Kugel (Radius K) liegende zweite Ringfläche angeordnet sein, wobei der Mittelpunkt der Kugel auf der verlängerten Achse des Pilzfußes jenseits der Pilzhutoberseite liegt, und der Ventilscheibenhebel eine Aufnahme für den Pilzfuß der Ventilscheibe bildet, die eine zur zweiten Ringfläche passende gleichfalls kugelförmige Auflagefläche bildet.

Diese Maßnahmen lassen ein Zerlegen der Anordnung zu, so daß die Einzelteile durch die sowieso vorhandenen Gehäuseöffnungen eingeführt und dann montiert werden können. Eine Demontage des Gehäuses und damit eine Mehrteiligkeit des Gehäuses ist daher entbehrlich.

Es kann zweckmäßig sein, daß die Teilkugelschale und/oder die Ventilsitzflächen eine Kreisnut zur Aufnahme eines Dichtungsringes aufweisen, wenn in vielen Anwendungsfällen auch ausreichend ist, ohne eine derartige ausätzliche Kreisnut mit Dichtungen und Dichtungsring zuszukommen.

Um die Exzenterwirkung möglichst einfach zu erreichen, hat sich eine Ausführungsform ergeben, bei der das den Exzenter tragende Ende der Betätigungsspindel einen eine zur Betätigungsspindelachse exzentrische Achse aufweisenden Mehrkant bildet, auf den eine, vorzugsweise radial geteilte, Mitnehmerbuchse mit an den Mehrkant angepaßter Bohrung und ringnutförmiger Außenform zur drehbaren, axial fixierten Aufnahme des einen Lagerring aufweisenden Ventilscheibenhebels besitzt.

Als besonders einfach und sicher im Aufbau hat sich eine Konstruktion erweisen, bei der die beiden Teile der Mitnehmerbuchse zueinander einen Abstand aufweisen und sich unter Wirkung einer Federkraft, vorzugsweise erzeugt mittels Tellerfederscheiben, gegen die Seitenflächen des von dem Ventilscheibenhebel gebildeten Lagerringes pressen.

Im allgemeinen wird es günstig sein, die Strömungsquerschnitte von Zuflußanschlußstück und Abflußanschlußstücken gleich zu wählen. In diesem Falle ist es günstig, wenn das Zuflußanschlußstück eine nach außen weisende ringförmige Sitzfläche für einen Düsenring bildet, wobei der innere Rand der ringförmigen Sitzfläche den engsten Teil des Zuflußanschlußstückes bildet und einen Durchmesser aufweist, der (vorzugsweise nur wenig) größer als der äußere Durchmesser der Ventilscheibe ist, und daß der auf der Sitzfläche aufliegende Düsenring eine innere Öffnung mit einem Durchmesser aufweist, der kleiner als der äußere Durchmesser der Ventilscheibe, vorzugsweise annähernd gleich dem inneren Durchmesser der Abflußanschlußstücke ist.

Zwischen Düsenring und ringförmiger Sitzfläche kann ein Dichtungsring angeordnet sein und der Düsenring einen am Umfang angeordneten Rücksprung zur Bildung einer nach außen weisenden Halteschulter aufweisen, auf die die Klemmfläche von vom Zuflußanschlußstück (Gehäuse) ausgehenden Haltemitteln wie Klemmkopfschrauben eingreifen. Auf diese Weise läßt sich der Düsenring abnehmen und beispielsweise gegen einen anderen austauchen oder auch zum Zwecke der Demontage oder des Austausches oder der Wartung des Ventilschiebers dessen Teilkugelschale herausnehmen.

Ein besonders einfacher Aufbau des Antriebs ergibt sich, wenn die Betätigungsspindel von zwei in einer Bohrung des Wechselventilgehäuses angeordneten Buchsen mit dazwischen angeordneter Dichtungspackung drehbar gelagert ist, wobei auf dem Gehäuse eine Lagerbrücke aufgeschraubt ist, die für das nach außen weisende Ende der Betätigungsspindel sowohl eine radiale wie auch eine axiale Drehlagerung bildet und auf die eine pneumatische oder elektrische, fernsteuerbare Betätigungseinrichtung aufsetzbar ist.

Wird das Gehäuse aus Stahlguß gefertigt, kann es zweckmäßig sein, an bestimmten Sitzflächen, wie insbesondere am Kugelsitz aufgepanzertes Edelstahl vorzusehen, der eine bessere, insbesondere rostfreie Dichtfläche bzw. Montagefläche ergibt. Ist die Aufpanzerung mittels Elektrodenschweißung aus Platz gründen (bei sehr kleinem Gehäuse) schwierig, kann auch das Gehäuse insgesamt vernickelt werden. Zwar ist es meistens günstig, die bilden Abflußanschlußstücke (wie beim Stand der Technik) mit Bezug auf die Achse des Zuflußanschlußstückes oder der Betätigungsspindel um 180° zueinander versetzt anzuordnen. Die Erfindung ermöglicht aber auch bei Bedarf eine abweichende Anordnung von z. B. 90°/270°.

Die Erfindung wird nachfolgend anhand der Figuren mittels eines Ausführungsbeispiels näher erläutert.

Es zeigt:

Fig. 1 schematisch in einem Axialschnitt ein bekanntes Wechselventil;

Fig. 2 in einer ähnlichen Ansicht wie in Fig. 1 ein Wechselventil mit bereits verbesserten Konstruktionsmerkmalen;

Fig. 3 in einer vergrößerten, nur die wichtigsten Teile darstellenden Schnittansicht ein Wechselventil gemäß dem erfindungsgemäßen Ausführungsbeispiel;

Fig. 4 in einem etwas vergrößerten Maßstab einen Teil des Gehäuses der Ausführungsform gemäß Fig. 3 mit weggelassenen Anbauteilen;

Fig. 5 in einer Seitenansicht die Antriebsspindel für den Wechselventilantrieb;

Fig. 6 eine Ansicht von oben auf die Spindel der Fig. 5;

Fig. 7 eine Ansicht von unten auf die Spindel der Fig. 5;

Fig. 8 eine axiale Schnittansicht auf den Ventilscheibenhebel;

Fig. 9 eine Ansicht in Richtung des Pfeiles A der Fig. 8;

Fig. 10 eine Ansicht von oben auf den Gegenstand der Fig. 8;

Fig. 11 eine axiale Schnittansicht durch die Ventilscheibe;

Fig. 12 eine Schnittansicht durch das Gehäuse der Fig. 4 entlang der Schnittlinie XII-XII in verkleinertem Maßstab;

Fig. 13 die Ansicht B auf die Abbildung der Fig. 12;

Fig. 14 eine Schnittansicht sowie eine Draufsicht auf die Mitnehmerbuchse;

Fig. 15 eine Detaildarstellung zur Erläuterung eines Dichtungsringes in der Ventilscheibe; und

Fig. 16 schematische einen Anwendungsfall für das erfindungsgemäße Wechselventil in Verbindung mit einem zweiten Wechselventil und zwei Sicherheitsventilen.

In Fig. 1 ist ein Wechselventil 10 dargestellt, bestehend aus einem Ventilgehäuse 12 mit einem Zuflußanschlußstück 14 und zwei Abflußanschlußstücken 16, 18, welche Anschlüsse 14, 16, 18 je nach Stellung eines in dem Gehäuse angeordneten Ventilschiebers 20 in Durchströmungsverbindung stehen. Der Ventilschieber 20 ist von außen mittels eines Drehantriebs, hier in Form eines Handrades 22 betätigbar, indem der Ventilschieber, der hier die Form eines Kolbens 20 aufweist, von dem mit dem Abflußanschlußstück 16 verbundenen Ventilsitz 24 zu dem mit dem Abflußanschlußstück 18 verknüpften Ventilsitz 26 verschoben wird.

In Fig. 2 ist ein ähnliches Wechselventil dargestellt, mit dem Unterschied, daß anstelle einer hin- und herbeweglichen, kolbenartigen Ventilschieberanordnung eine entsprechende drehbare Anordnung vorgesehen ist, die nach Betätigung einer Entriegelungsvorrichtung 28 (die zunächst um 180° gedreht werden muß) dadurch betätigt werden kann, daß über eine Spindel 22 ein entsprechendes inneres Gehäuseteil 30 ebenfalls um 180° verschwenkt und dadurch ein Strömungskanal derart umgelegt werden kann, daß der Strömungsweg statt vom Zuflußanschlußstück 14 zum einen Abflußanschlußstück 16 ein solcher zum anderen Abflußanschlußstück 18 hergestellt wird.

Wie zu erkennen ist, ist die Konstruktion gemäß Fig. 2 zwar strömungstechnisch wesentlich günstiger als die der Fig. 1, auch ist mit nur einer einzigen Halbdrehung die Umschaltung zu vollziehen, während beim Kolbenventil gemäß Fig. 1 viele Umdrehungen notwendig sind, jedoch ist der Aufbau gemäß Fig. 2 noch recht kompliziert (Gehäuse ist mehrteilig!) und damit in der Herstellung teuer.

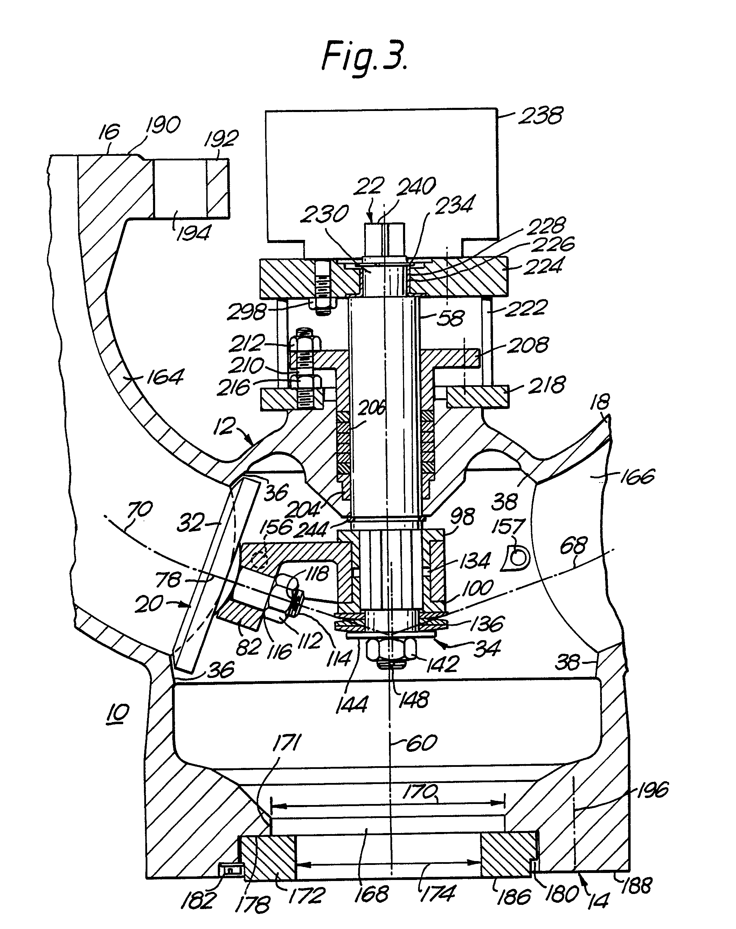

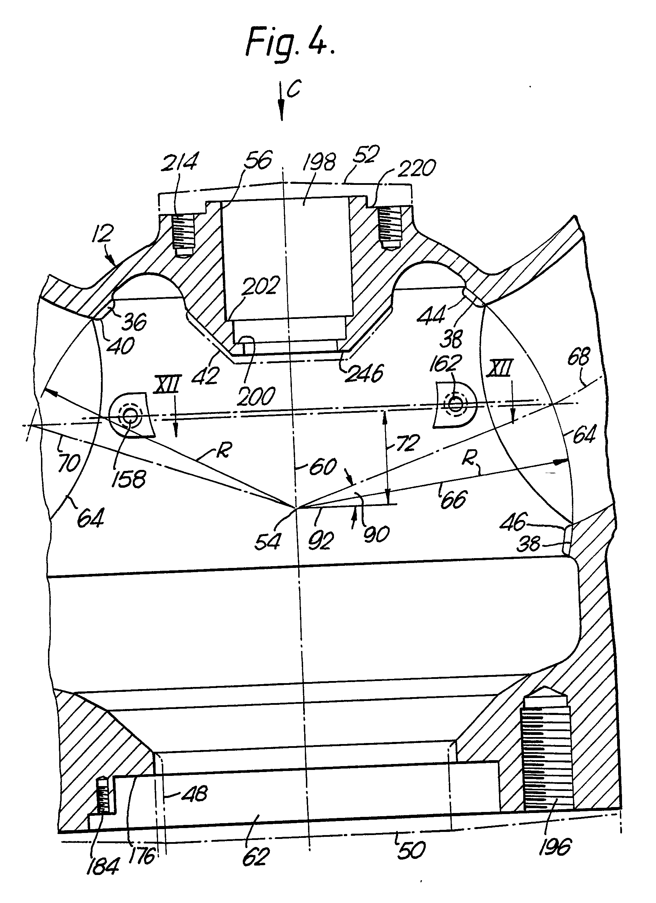

Diese Nachteile vermeidet eine Konstruktion, wie sie die Axialschnittdarstellung der Fig. 3 in Einzelheiten wiedergibt. Der Grundaufbau ist ähnlich dem der bereits beschriebenen Wechselventile gemäß den Fig. 1 und 2, d. h., daß auch hier wieder ein Ventilgehäuse 12 vorhanden ist, mit einem Zuflußanschlußstück 14 und zwei Abflußanschlußstücken 16, 18 (nur teilweise dargestellt), und es ist auch ein von außen mittels Drehantrieb 22 betätigbarer, innerhalb des Gehäuses 12 angeordneter Ventilschieber oder besser Ventilscheibe 20 vorgesehen, die wahlweise die Durchströmungsverbindung vom Zuflußanschluß 14 zu dem einen oder dem anderen Abflußanschlußstück 16 bzw. 18 herstellt. Im Gegensatz zu den beiden anderen Wechselventilen ist hier jedoch der Ventilschieber 20 bzw. die Ventilscheibe von einer Teilkugelschale bzw. von einem Kugelring 32 gebildet, der mittels eines Exzenterantriebs 34 auf gleichfalls Teilkugelflächen bzw. Kugelringe 36, 38 darstellenden Ventilsitzflächen aufschiebbar und andrückbar ist. Wie Fig. 4, eine etwas vergrößerte Darstellung des Gehäuses gemäß Fig. 3, erkennen läßt, werden die Kugelringbereiche 36, 38 für den Ventilsitz beispielsweise dadurch hergestellt, daß zunächst ein entsprechendes einteiliges Gehäuse 12 an bestimmten Stellen mit Übermaß gegossen wird, siehe beispielsweise die gestrichelten Übermaßstellen 40, 44, 46 an den zu bearbeitenden Kugelringsitzflächen 36, 38, und diese Stellen dann bearbeitet werden. Die Kugelringflächen 36 werden so bearbeitet, daß sie auf einer Kugelfläche liegen, deren Mittelpunkt bei 54 liegt, also auf der Achse 60 der Bohrung 56 für die Betätigungsspindel 58, siehe auch Fig. 3.

Das Gehäuse besitzt eine ausreichend große Öffnung 62 am unteren Ende (an dem später das Zuflußanschlußstück 14 entsteht), um ein Werkzeug einbringen zu können, das es ermöglicht, die Übermaßbereiche 40, 44, 46 so zu bearbeiten, daß eine Bearbeitungsfläche entsteht, die auf einer Kugel 64 mit dem Mittelpunkt 54 und dem Kugelradius 66 liegt. Der Kugelmittelpunkt 54 liegt soweit unterhalb des Bereiches der Bohrung 56, daß auch ausreichend Platz für Anordnung und Bewegung der entsprechend geformten Ventilscheibe 20 bleibt, und daß außerdem die von dem beiden Ventilsitzflächen 36 bzw. 38 gebildeten Kanalöffnungsrichtungen 68 bzw. 70 bereits eine Neigung nach oben besitzen, d. h., daß der Kugelmittelpunkt 54 ein gutes Stück, siehe Bezugszahl 72, unterhalb der jeweiligen Achsenmittelpunkte 68 bzw. 70 im Bereich der Ventilsitze 36, 38 liegt.

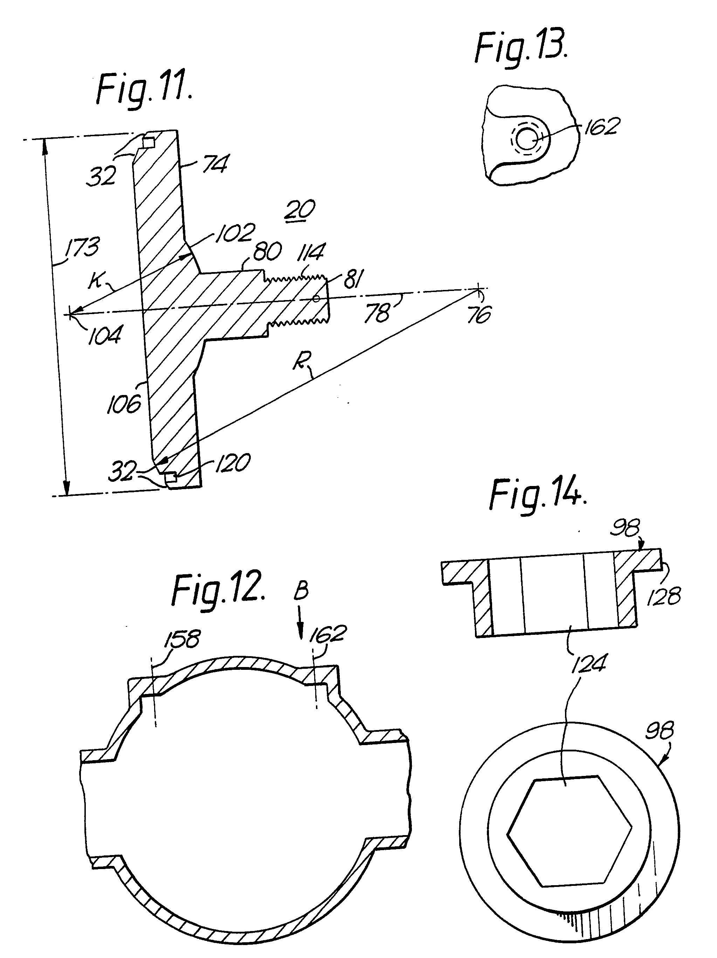

Es sei nun näher auf die Ventilscheibe 20 eingegangen, die in Fig. 11 in einer Schnittansicht zu erkennen ist und die die Form eines Pilzes aufweist, mit einem Hut 74, dessen oberer Rand wiederum einen auf einer Kugel mit dem Mittelpunkt 76 liegender Kugelrand 32 ist. Der Durchmesser dieser Kugel, R, entspricht genau dem Durchmesser der Kugel mit dem Mittelpunkt 54 innerhalb des Gehäuses 12. Der Mittelpunkt dieser Kugel, 76, liegt auf der verlängerten Achse 78 des Pilzfußes 80, und zwar noch jenseits des Fußendes 81. Wie die Fig. 3 erkennen läßt, wird diese pilzförmige Ventilscheibe 20 von einem Ventilscheibenhebel 82 so gehalten, daß der Kugelmittelpunkt 76 der Ventilscheibe 20 auf dem Kugelmittelpunkt 54 des Gehäuses 12 zu liegen kommt, wenn sich die Ventilscheibe auf dem in Fig. 3 dargestellten verschließenden Sitz befindet.

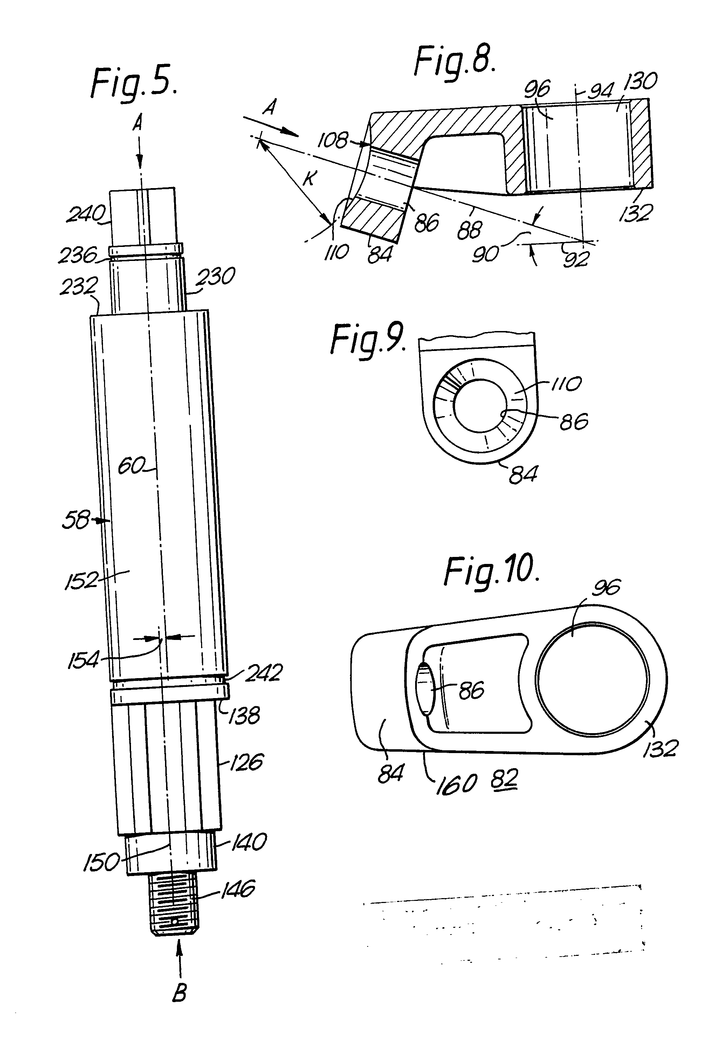

Der Ventilscheibenhebel 82, siehe dazu seine Detaildarstellung in Fig. 8 (Axialschnittansicht), Fig. 9 (Ansicht in Richtung A) und Fig. 10 (Ansicht von oben) ist daher so konstruiert, daß er der Ventilscheibe 20 in einer ganz bestimmten Endstellung der Spindel 58 genau diese Position erteilt. Dazu weist der Ventilscheibenhebel 82 zunächst einen Ventilscheibenfußaufnahmekopf 84 mit einer Bohrung 86 zur Aufnahme des Fußes 80 der Ventilscheibe auf, wobei die Achse 88 dieses Durchbruches einen Winkel zur Ebene 92 aufweist, die senkrecht zur Achse 60 der Betätigungsspindel 58 und damit auch zur Achse 94 einer Bohrung 96 ist, mit der der Hebel 82 auf ein von zwei Mitnehmerbuchsenteilen 98, 100 gebildetes Lager am Ende der Spindel 58 gehalten wird. Dieser Winkel 90 entspricht dem entsprechenden Winkel 90 in der Fig. 4, gebildet wiederum zwischen der Ebene 92 und der zum Kugelmittelpunkt 54 laufenden Linie 68 bzw. 70, die zum Strömungskanalzentrum der beiden Verzweigungen führen.

Um eine möglichst genaue Anlage des kugelförmige Abdichtrandes 32 der Dichtungsscheibe 20 an entweder dem kugelförmigen Ventilsitz 38 oder 36 zu erhalten, ist es zweckmäßig, eine geringfügige Ausrichtmöglichkeit während der Montage der Ventilscheibe 20 in dem Ventilscheibenhebel 82 vorzusehen. Zu diesem Zweck ist am Übergang zwischen dem Fuß 80 und der Hutunterseite 74 der pilzförmigen Ventilscheibe 20 eine weitere auf einer Kugelfläche liegende Ringfläche 102 vorgesehen, wobei der Mittelpunkt dieser Kugelfläche bei 104 und damit auf der verlängerten Achse 78 des Pilzfußes 80 jenseits der Pilzhutoberseite 106 liegt. Entsprechend besitzt der Ventilscheibenhebel 82 eine Aufnahme 108, die ebenfalls eine ringförmige, auf einer Kugeloberfläche liegende Fläche 110 bildet, die einen Krümmungsradius K aufweist, der genau dem Krümmungsradius K der Kugelringfläche 102 der Ventilscheibe 20 entspricht, wenn auch das eine konkave und das andere eine konvexe Kugelfläche darstellt. Da der Durchmesser des Pilzfußes 80 etwas kleiner ist als der Bohrungsdurchmesser der Bohrung 86, so daß etwas Spiel verbleibt, gelingt es, vor dem Festlegen der Ventilscheibe 20 in dem Ventilscheibenhebel 82 durch Aufschrauben der Mutter 112 auf das mit einem Gewinde versehene Ende 114 des Fußes, unter Zwischenlage einer Beilagscheibe 116, die Ventilscheibe 20 bezüglich des Ventilscheibenhebels 82 geringfügig winkelmäßig so auszurichten, daß ein exaktes Anliegen der Dichtungsflächen aneinander gewährleistet ist. Nunmehr kann die Mutter 112 festgezogen und dann durch Einführen eines Sicherungsstiftes 118 gesichert werden. Um einen noch besseren abdichtenden Sitz zu erhalten, kann, wie Fig. 11 erkennen läßt, in der Kugelringfläche 32 noch eine Ringnut 120 zur Aufnahme eines Dichtungsringes 122 vorgesehen werden, siehe auch Fig. 15.

Es wurde schon erwähnt, daß der Ventilscheibenhebel 82 von zwei Mitnehmerbuchsen 98, 100 gehalten wird, von denen eine in der Fig. 14 in einer Schnittansicht und in einer Ansicht von unten dargestellt ist. Diese Mitnehmerbuchsen besitzen einen Mehrkantdurchbruch 124, hier in Form eines Sechskants, passend zu der entsprechenden Mehrkantaußenform, den die Betätigungsspindel 58 gemäß Fig. 5 nahe ihrem unteren Ende aufweist, siehe Bezugszahl 126. Zur Montage des Ventilscheibenhebels wird daher eine Mitnehmerbuchse 98 mit ihrem randfreien Ende von oben und eine weitere Mitnehmerbuchse 100 von unten in die Bohrung 96 des Hebels 82 eingeschoben, wobei sich die Mitnehmerränder 128 and die Stirnflächen 130, 132 des Hebels 82 anlegen, da die beiden Buchsen 98, 100 sich nur soweit in die Bohrung 96 hineinerstrecken, daß noch ein freier Raum 134 verbleibt. Die beiden Buchsen 98, 100 können daher beispielsweise mittels Tellerfedern 136 gegen eine Schulter 138 gepreßt werden, die am Ende des Mehrkantbereiches 126 von der Betätigungsspindel 58 gebildet wird. Die Tellerfedern 136 sind ihrerseits auf einem runden, zurückspringenden Bereich 140 aufgeschoben und durch eine Mutter 142 (siehe Fig. 3) unter Zwischenlage einer Beilagscheibe 144, aufgeschraubt auf ein mit Gewinde versehenes Ende 146 der Spindel 58 und mit einem Stift 148 gesichert, gehalten. Durch den Druck der Tellerfedern entsteht eine erwünschte, ein Drehmoment erzeugende Reibung zwischen den Buchsen 98, 100 und dem dazwischen eingeklemmten, jedoch noch gegen diese Reibung verdrehbaren Ventilscheibenhebel 82.

Die Achse 150 des Mehrkants 126, des Bereiches 140 und des Endes 146 ist gegenüber der Achse 60, mit der die Spindel in dem Gehäuse 12 gelagert ist, siehe Bezugszahl 152, um ein Maß 154 versetzt, siehe auch Fig. 7. Durch diese Verkröpfung oder Exzentrizität gelingt es, bei festgehaltener Drehstellung des Scheibenhebels 82 eine Verschiebung senkrecht zur Achse 60 bzw. 154, und zwar um insgesamt das doppelte Ausmaß der Versetzung 154.

Dreht man daher, beispielsweise über den Vierkant, dargestellt bei 22 in Fig. 3, die Betätigungsspindel 58 beispielsweise in Uhrzeigerrichtung, wird die beispielsweise im Gehäuse 12 noch frei bewegliche Ventilscheibe 20 in die Zeichenebene hineinbewegt, und zwar aufgrund der Reibung und dem zugehörigen Mitnahmeeffekt zwischen dem Ventilscheibenhebel 82 und den Mitnahmebuchsen 98 und 100. Sobald die Achse 78 der Ventilscheibe 20 mit der Achse 70 des Ventilsitzen 36 zusammenfällt, schlägt der Ventilscheibenhebel an einer einstellbaren Anschlagschraube 156 an, die durch ein entsprechendes Gewindes 158 im Gehäuse 12 gehalten, sich an die Seitenfläche 60 des Hebels 82 diesen und damit die Ventilscheibe 20 genau ausrichtend anlegt und die Ventilscheibe festhält. Wird jetzt die Spindel 58 weiter in Uhrzeigerrichtung gedreht, bewegen sich die Mitnehmerbuchsen 98, 100 gegen Reibung mit Bezug auf den Hebel 82 und bewirken, daß dieser sich infolge der Exzentrizität nach links in Richtung auf den Ventilsitz 36 bewegt. Die Anordnung sollte derart getroffen werden, daß kurz vor Erreichen der maximalen Auslenkung des Exzenters nach links (gemäß Fig. 3 gesehen) die Ventilscheibenanlagefläche 32 and der Gehäuseventilsitzfläche 36 sich exakt anlegt. In diesem Moment ist die geschlossen Endstellung für den Verschluß der linken Verzweigung und die Öffnung der rechten Verzweigung erreicht.

Zur Umschaltung des Ventils wird die Spindel 58 in Gegenuhrzeigerrichtung bewegt, wobei zunächst noch die Ventilscheibe 20 in ihrem Sitz festhängt und dadurch zunächst wieder eine Bewegung der von der Spindel 58 mitgenommenen Mitnehmerbuchsen 98, 100 mit bezug auf das in diesen Buchsen gelagerte Ende des Ventilscheibenhebels 82 verdreht wird, bis durch die Exzenterbewegung, die die Scheibe 20 von dem Gehäuse 36 weg bewegt, die Scheibe 20 freikommt, woraufhin diese sich frei in dem Gehäuse 12 um die Drehachse 60 aus der Zeichenebene heraus um etwa 180° wieder in die Zeichenebene hineinbewegt und dann eine Position erreicht, die von dem Anschlag einer Anschlagschraube 157 bestimmt wird. Beim Weiterdrehen der Spindel 58 erfolgt wieder eine Verschiebung der Scheibe 20 auf den kugelringförmigen Sitz 38 des Gehäuses 12 zu, bis eine abdichtende Endstellung erreicht ist.

Der gesamte Drehweg der Spindel 58 wird daher größer als 180°, jedoch kleiner als 360° sein, wobei der Drehwinkel von 180° für die freie Verschwenkbewegung der Ventilscheibe 20 benötigt wird, und die darüber hinausgehende Drehbewegung von jeweils etwa weniger als 90° dazu verwendet wird, um eine Verschiebung der Ventilscheibe 20 senkrecht zur Achse 60 infolge der Verkröpfung zu bewirken.

Da das Gehäuse 12 nicht geteilt sein sollte, andererseits die Ventilscheibe 20 naturgemäß durch die Kanäle 164 bzw. 166 nicht eingeführt werden kann (da sonst sich keine passende Sitzringfläche 36 bzw. 38 ergeben würde), ist der Zuflußkanal 168 mit einem solchen Durchmesser 170 ausgestattet, daß die Scheibe 20 hindurchpaßt. Das bedeutet, daß der Durchmesser 170 größer ist als der Durchmesser 173 der Ventilscheibe 20. Um andererseits aber den strömungstechnisch sich ergebenden Kanalquerschnitt für das Zuflußanschlußstück an die entsprechenden Kanalquerschnitte der beiden Zuflußabflußstücke 16, 18 anzupassen, ist ein Düsenring 172 vorgesehen, dessen Innendurchmesser 174 annähernd dem Innendurchmesser der beiden Kanäle 164 bzw. 166 angepaßt ist. Dieser Düsenring 172 sitzt auf einer ringförmigen Sitzfläche 176 auf, wobei zwischen Düsenring 172 und Sitzfläche 176 ein Dichtungsring 178 angeordnet ist, wobei der Düsenring 172 einen am Umfang angeordneten Rücksprung 180 zur Bildung einer nach außen weisenden Halteschulter aufweist, auf die die Klemmfläche von vom Zuflußanschlußstück ausgehenden Haltemittel wie Klemmkopfschrauben 182 eingreifen. Diese Klemmkopfschrauben sind in entsprechenden Bohrungen 184, von denen beispielsweise sechs über die Ringfläche verteilt sind, angeschraubt, siehe die Fig. 4. Der Düsenring springt mit seiner nach außen liegenden Fläche 186 etwas über die entsprechende Gehäusefläche 188 vor und bildet insoweit einen Anschlußklemmbereich zur Zwischenlage eines Flanschdichtungsringes, entsprechend dem vorspringenden Bereich 190 gegenüber dem etwas zurückspringenden Bereich 192 bei den Flanschanschlüssen beispielsweise des Abflußanschlußstückes 16, siehe die Fig. 3 oben links. Für die Bolzen, die zum Anflanschen dienen, sind Bohrungen 194 bei den Abflubanschlußstücken vorgesehen, während beim Zuflubanschlußstück entsprechende Gewindesackbohrungen 196 vorgesehen sind, beispielsweise sechs über den Umfang verteilt.

Zur Lagerung der Betätigungsspindel 58 innerhalb des Gehäuses dient ein Durchbruch 198 mit durch Durchmesservergrößerungen gebildeten Ringschultern 200 und 202. Auf diesen Ringschultern stützt sich eine Bundbuchse 204 ab, die ein Drehlager für die Spindel 58 bildet, und die ihrerseits die Anlagefläche für eine Dichtungspackung 206, bestehend beispiels weise aus drei Reingraphitdichtungen sowie an deren beiden Außenflächen angeordnete graphitimprägnierte Schnüre, welche Dichtungspackung durch eine Stopfbuchsenbrille 208 zusammengepreßt wird, indem zwei auf Bolzen 210 aufgesetzte Muttern 212 angezogen werden. Die Bolzen 210 ihrerseits sind in entsprechenden Sackgewindebohrungen 214 des Gehäuses 12 eingeschraubt. Diese Bolzen halten mit Hilfe einer weiteren Mutter 216 einen unteren Ring 218, der auf einer entsprechenden Rücksprungfläche 220 des Gehäuses 12 aufsetzbar ist, auf welchen Ring 218 seinerseits zwei Querwände 222 aufgeschweißt sind (das ganze kann aber auch eine Gußkonstruktion sein), auf deren wiederum ein oberer Ring 224 aufgeschweißt ist und der eine Mittelbohrung 226 aufweise mit einem Ringlagerblech 228, der den Wellenansatz 230 umschließt und einen Anschluß für die Ringschulterfläche 232 bildet, so daß die Welle nach oben hin nicht axial sich verschieben kann. Eine Verschiebung nach unten (gesehen gemäß Fig. 3 bzw. gemäß Fig. 5) wird verhindert durch einen Sicherungsring 234, der in einer Ringnut 236 der Spindel 58 angeordnet ist. Der Ring 224 kann außerdem einen Antriebsmechanismus 238 tragen, beispielsweise einen elektromotorischen oder einen pneumatischen Antrieb, der an dem Vierkantende 240 der Spindel 56 angreift.

Hier gibt es teilweise nationale Normen, in Deutschland die Norm DIN 3337, die die Maße für den Vierkant 240 und die Anordnung der Bohrungen für Flanschbefestigungsbolzen 298 festlegt.

Fig. 5 zeigt noch einen weitere Ringnut 242 zur Aufnahme eines Federringes 224 als weiteren Anschlag an der Gehäuseinnenfläche 246.

Fig. 12 zeigt eine stark verkleinerte Schnittansicht durch das Gehäuse gemäß Fig. 4 zur Erläuterung der Anordnung der Gewindebohrungen 158 bzw. 162 für die Anschlagschrauben 156 bzw. 157.

Fig. 16 zeigt die Anwendung eines erfindungsgemäßen Wechselventils als Domentlüftung eines großen Gasbehälters 250, wobei dem Wechselventil 10 zwei Sicherheitsventile 251, 252 nachgeschaltet sind, die ihrerseits wieder in ein (umgekehrt angeordnetes) Wechselventil 253 münden, von dem dann ein Ausgangsanschluß 254 weiterführt.

Wird ein motorischer Antrieb 238 vorgesehen, kann die Ventilbetätigung im Störfall schnell und ohne zeitraubendes Besteigen des Gasbehälters 250 auch von einer Schaltwarte aus erfolgen. Erst später (z. B. zum Auswechseln von einem durch die Umschaltung stillgelegten Sicherheitsventils) wird eine Person auf den Gasbehälter steigen und die notwendigen Arbeiten verrichten.

## Ansprüche

1. Wechselventil, bestehend aus einem Ventilgehäuse (12) mit einem Zuflußanschlußstück (Abflußanschlußstück) (14) und zwei Abflußanschlußstücken (Zuflußanschlußstücken) (16; 18), welche Anschlußstücke (14, 16, 18) miteinander in Durchströmungsverbindung stehen, und einem von außen mittels Drehantrieb (22) betätigbaren, innerhalb des Ventilgehäuses (12) angeordneten Ventilschieber (Ventilscheibe) (20), der wahlweise die Durchströmungsverbindung vom Zuflußanschlußstück (Abflußanschlußstück) (14) zu dem einen oder dem anderen Abflußanschlußstück (Zuflußanschlußstück) (16, 18) herstellt, dadurch gekennzeichnet, daß der Ventilschieber (Ventilscheibe) (20) von einer Teilkugelschale (32) gebildet wird, die mittels eines Exzenterantriebs (34) auf gleichfalls auf einer Kugelfläche liegenden Ventilsitzflächen (36 bzw. 38) aufschiebbar und andrückbar ist.

2. Wechselventil nach Anspruch 1, dadurch gekennzeichnet, daß das Gehäuse (12) mit den Anschlußstücken (14, 16, 18) aus einem Stück, insbesondere durch Stahlguß oder Edelstahlguß, gefertigt ist.

3. Wechselventil nach Anspruch 1 oder 2, dadurch gekennzeichnet, daß die Teilkugelschale (32) von dem Hut einer pilzförmigen Ventilscheibe (20) gebildet wird, deren Pilzrand eine auf einer Kugel (Radius R) liegende erste Ringfläche (32) bildet, wobei der Kugelmittelpunkt (76) auf der verlängerten Achse (78) des Pilzfußes (80) jenseits des Fußendes (81) liegt, und daß die Ventilscheibe (20) von einem auf der Betätigungsspindel (58) des Drehantriebs (22) exzentrisch (Achse 150) zur Betätigungsspindelachse (60) gelegenen Ventilscheibenhebel (82) derart gehalten ist, daß der Kugelmittelpunkt (76) annähernd (abgesehen von der Exzenterbewegung) auf der Achse (60) der Betätigungsspindel (58) liegt.

4. Wechselventil nach Anspruch 3, dadurch gekennzeichnet, daß am Übergang zwischen Pilzfuß (80) und Pilzhutunterseite (74) eine auf einer Kugel (Radius K) liegende zweite Ringfläche (102) angeordnet ist, deren Kugelmittelpunkt (104) auf der verlängerten Achse (78) des Pilzfußes (80) jenseits der Pilzhutoberseite (106) liegt, und daß den Ventilscheibenhebel (82) eine Aufnahme (108) für den Pilzfuß (80) der Ventilscheibe (20) bildet, die eine zur zweiten Ringfläche (102) passende gleichfalls kugelförmige Auflagefläche (110) bildet.

5. Wechselventil nach Anspruch 1, 2, 3 oder 4, dadurch gekennzeichnet, daß die Teilkugelschale (32) und/oder die Ventilsitzfläche (36, 38) des Gehäuses (12) eine Kreisnut (120) zur Aufnahme eines Dichtungsringes (122) aufweisen.

6. Wechselventil nach einem der Ansprüche 3 bis 5, dadurch gekennzeichnet, daß das den Exzenter (34) tragende Ende der Betätigungsspindel (58) einen eine zur Betätigungsspindelachse (60) exzentrische Achse (150) aufweisenden Mehrkant (126) bildet, auf den eine, vorzugsweise radial geteilte (Abstand 134) Mitnehmerbuchse (98, 100) mit an den Mehrkant (126) angepaßter Bohrung (124) und ringnutförmiger Außemform zur drehbaren, axial fixierten Aufnahme des einen Lagerring (Bohrung 96, Ränder 130, 132) aufweisenden Ventilscheibenhebels (82).

7. Wechselventil nach Anspruch 6, dadurch gekennzeichnet, daß die beiden Teile (98, 100) der Mitnehmerbuchse zueinander einen Abstand (134) aufweisen und sich unter Wirkung einer Federkraft, vorzugsweise erzeugt mittels Tellerfederscheiben (136), gegen die Seitenflächen (130, 132) des von dem Ventilscheibenhebel (82) gebildeten Lagerringes pressen.

8. Wechselventil nach einem der Ansprüche 2 bis 7, dadurch gekennzeichnet, daß das Zuflußanschlußstück (Abflußanschlußstück) (14) eine nach außen weisende ringförmige Sitzfläche (178) für einen Düsenring (172) bildet, wobei der innere Rand (171) der ringförmigen Sitzfläche den engsten Teil des Zuflußanschlußstückes (Abflußanschlußstückes) (14) bildet und einen Durchmesser (170) aufweist, der (vorzugsweise nur wenig) größer als der äußere Durchmesser (173) der Ventilscheibe (20) ist, und daß der auf der ringförmigen Sitzfläche (178) aufliegende Düsenring (172) eine innere Öffnung mit einem Durchmesser (174) aufweist, der kleiner ist als der Durchmesser (173) der Ventilscheibe (20), vorzugsweise annähernd gleich dem Durchmesser des inneren Durchmessers der Abflußanschlußstücke (Zuflußanschlußstücke) (16, 18) ist.

9. Wechselventil nach Anspruch 8, dadurch gekennzeichnet, daß zwischen Düsenring (178) und ringförmiger Sitzfläche (176) ein Dichtungsring (178) angeordnet ist und der Düsenring (172) einen am Umfang angeordneten Rücksprung (180) zur Bildung einer nach außen weisenden Halteschulter aufweist, auf die die Klemmfläche von vom Gehäuse (12) ausgehenden Haltemitteln wie Klemmkopfschrauben (182) eingreifen.

10. Wechselventil nach einem der Ansprüche 1 bis 9, wobei die Betätigungsspindel (58) von zwei in einer Bohrung (198) des Ventilgehäuses (12) angeordneten Buchsen (204; 208) mit dazwischen angeordneter Dichtungspackung (206) drehbar gelagert ist, dadurch gekennzeichnet, daß auf dem Gehäuse (12) eine Lagerbrücke (218, 222, 224) aufgeschraubt (210, 216) ist, die für das nach außen weisende Ende der Betätigungsspindel (58) sowohl eine radiale wie eine axiale (232; 236) Drehlagerung bildet und auf die eine pneumatische oder elektrische, fernsteuerbare Betätigungeinrichtung (238) aufsetzbar ist (Schraubbolzen 298).

11. Wechselventil nach einem der Ansprüche 1 bis 10, dadurch gekennzeichnet, daß das Gehäuse (12) zwei Anschläge (158, 162) zur Ausrichtung der Ventilscheibe (20) in ihren beiden Schließstellungen aufweist.

12. Wechselventil nach Anspruch 11, dadurch gekennzeichnet, daß die Betätigungsspindel (58) oder die Betätigungseinrichtung (238) zwei Anschläge bildet, die die Spindelbewegung auf einen Drehweg von weniger als 360° begrenzt, wobei an den Anschlagpunkten die Exzenterachse in Richtung auf den am Gehäuseanschlag (156 bzw. 157) anliegenden Zielscheibe (20) gerückt ist.

13. Wechselventil nach einem der Ansprüche 1 bis 12, dadurch gekennzeichnet, daß das Gehäuse (12) aus Stahlguß besteht und daß bei Gehäusegrößen, die den Zugang mit Schweißelektroden erlauben, die Bearbeitungsbereiche (40, 44, 46) aufgepanzerten Edelstahl aufweisen oder, insbesondere bei kleinen Gehäusegrößen, das Gehäuse vernickelt ist, und daß die innerhalb des Gehäuses angeordneten Einzelteile aus Edelstahl gefertigt sind oder aus vernickelten Stahl bestehen.

14. Wechselventil nach einem der Ansprüche 1 bis 13, dadurch gekennzeichnet, daß die beiden Abflußanschlußstücke (16, 18) mit Bezug auf die Spindelachse (60) eine unsymmetrische Anordnung aufweisen, beispielsweise im Winkel 90°/270° zueinander liegen.

8

Fig.1.

Fig.2.

Fig.6.

Fig.7.

*Fig.3.*

# Fig. 4.

EP 0 377 058 A1

## Fig.5.

## Fig.8.

## Fig.9.

## Fig.10.

EP 0 377 058 A1

Fig.13.

Fig.11.

Fig.12.

Fig.14.

Fig.15.

Fig.16.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 167 836 (THORN)<br>* Seite 1, Zeile 106 - Seite 2, Zeile 9 * <br>--- | 1 | F 16 K  11/052<br>B 65 G  53/56 |
| A | GB-A- 309 793 (MELLING)<br>* Seite 2, Zeile 77 - Seite 3, Zeile 30 *<br>--- | 1,3,4 | |
| A | DE-B-1 199 186 (JAKOBSMEYER)<br>* Spalte 3, Zeile 21 - Spalte 4, Zeile 24 *<br>--- | 1-3,5 | |
| A | US-A-3 180 362 (MULLER)<br>* Spalte 2, Zeile 24 - Spalte 3, Zeile 27 *<br>--- | 1,3,5 | |
| A | US-A-2 530 295 (FANTZ)<br>----- | | |

**RECHERCHIERTE SACHGEBIETE (Int. Cl.5)**

F 16 K
B 65 G

Der vorliegende Recherchenbericht wurde für alle Patentansprüche erstellt

| Recherchenort | Abschlußdatum der Recherche | Prüfer |
|---|---|---|
| DEN HAAG | 04-09-1989 | VERELST P.E.J. |